(19) **Europäisches Patentamt**
**European Patent Office**
**Office européen des brevets**

(11) **EP 4 654 068 A1**

(12) # EUROPEAN PATENT APPLICATION

(43) Date of publication:
**26.11.2025   Bulletin 2025/48**

(21) Application number: **24177142.7**

(22) Date of filing: **21.05.2024**

(51) International Patent Classification (IPC):
**G06F 30/23** (2020.01)       **G06F 30/28** (2020.01)
**F28F 7/02** (2006.01)        **G06F 119/08** (2020.01)
**G06F 119/18** (2020.01)

(52) Cooperative Patent Classification (CPC):
**F28F 7/02; G06F 30/23; G06F 30/28;**
F28F 2200/00; G06F 2119/08; G06F 2119/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **VITO NV
2400 Mol (BE)**

• **Buckinx, Geert
3000 Leuven (BE)**

(72) Inventor: **BUCKINX, Geert
3000 Leuven (BE)**

(74) Representative: **V.O.
P.O. Box 87930
2508 DH Den Haag (NL)**

(54) **METHOD AND SYSTEM FOR OPTIMIZING THERMAL ENERGY TRANSFER DEVICES
THROUGH GEOMETRIC CONFIGURATION OPTIMIZATION**

(57)    The present invention relates to a computer-implemented method and system for optimizing geometric configurations within thermal energy transfer device comprising at least one thermal energy exchange channel to enhance performance. The method involves obtaining target design criteria for a physical object and defining a unit cell dimensioned such that the thermal energy transfer channel is formed by a matrix of N1 × N2 identical unit cells. Shape optimization is performed at the unit cell level by iteratively modifying the boundary surfaces of solid structures within a unit cell based on criteria including performance. Optimized design parameters are outputted and transferred to production equipment for creating an optimized thermal energy transfer device. This device comprises a matrix of structures arrayed in at least one dimension, derived from optimized unit cell models.

FIG 3

**Description**

FIELD OF THE INVENTION

The invention relates to a computer-implemented method for optimizing geometric configurations of a thermal energy transfer channel as a physical object. Furthermore, the invention also relates to a system for optimizing geometric configurations within a thermal energy transfer channel of a physical object. The invention also relates to a method for constructing a thermal energy transfer device. Additionally, the invention relates to a thermal energy transfer device.

BACKGROUND TO THE INVENTION

For thermal management systems, efficient heat transfer is important. The efficient transfer of thermal energy is a critical aspect in numerous fields, including electronics cooling, automotive, aerospace, and energy systems. The performance and longevity of many devices and systems are heavily reliant on their ability to manage heat effectively.

In state of the art, the design and optimization of thermal energy transfer devices, as employed in cooling devices and heat exchangers, are often challenged by the complexity of their structures and the demanding requirements of their applications. Such devices may comprise channels for receiving a heat exchange fluid therein. Traditional methods for designing these devices generally involve complex and resource-intensive computational processes, where the entire configuration of the device is subject to optimization. This approach, while thorough, can be exceedingly time-consuming and computationally expensive, making it impractical for many applications, especially where rapid development and iteration are necessary.

Another limitation of existing approaches is the difficulty in modeling and optimizing fluid flow and heat transfer within these devices. Accurately predicting and controlling the behavior of thermal fluids through complex geometries is a non-trivial task, particularly when dealing with varying temperature fields and flow conditions. This complexity often results in designs that are either overly conservative or fail to meet performance expectations under real-world conditions.

Furthermore, achieving an optimal balance between thermal performance and manufacturability remains a substantial hurdle. Manufacturing constraints further complicate the design and production of optimized thermal energy transfer devices. Traditional manufacturing methods may not be well-suited to produce intricate or non-standard geometries that are often required for optimized thermal performance. The limitations in feature resolution, material handling, and structural integrity pose significant barriers to the realization of highly optimized designs.

Lastly, the integration of these thermal management systems into larger assemblies or devices also presents challenges. The need to accommodate specific operating conditions, such as maximum pumping power or pressure drop requirements, often necessitates compromises in design that can detract from overall thermal efficiency.

In summary, the current state of the art in the design and optimization of thermal energy transfer devices for manufacturing thereof faces significant challenges in terms of computational efficiency, material integration, fluid flow and heat transfer modeling, manufacturability, and integration into larger systems. There is a strong desire for an improved approach to the design and optimization of thermal energy transfer channels for manufacturing thereof, which can address these limitations and meet the demanding requirements of thermal transfer applications.

SUMMARY OF THE INVENTION

It is an object of the invention to provide for a method and a system that obviates at least one of the above mentioned drawbacks.

Additionally or alternatively, it is an object of the invention to provide for an improved computer-implemented method and system for optimizing geometric configurations of a thermal energy transfer channel as a physical object.

Additionally or alternatively, it is an object of the invention to provide for an improved method for constructing a thermal energy transfer device.

Thereto, the invention provides for a computer-implemented method for optimizing geometric configurations of a thermal energy transfer channel of a thermal energy exchange device as a physical object, including the steps of: obtaining target design criteria of the physical object; defining, based on the target design criteria of the physical object, a unit cell which is dimensioned such that the thermal energy transfer channel is formed by $N1 \times N2$ identical unit cells; performing, by means of a processing unit, a shape optimization of solid structures in the thermal energy transfer channel at the unit cell level, wherein the geometric design of structures of a single unit cell is optimized based on a set of criteria including at least performance, wherein the shape optimization involves iterative modification of the boundary surfaces of at least one solid structure within the single unit cell, and wherein the shape optimization of the single unit cell is performed until a stop criterion is met, the stop criterion being defined as achieving a predetermined threshold of performance or reaching a maximum number of optimization iterations; outputting optimized design parameters representing geometric configuration of solid structures in each unit cell of the thermal energy transfer channel; and transferring data based on the outputted optimized design parameters to production equipment to manufacture an optimized physical object representing the thermal energy transfer channel with N1 × N2 identical unit cells.

A computer-implemented method for optimizing geometric configurations of a thermal energy transfer channel of a thermal energy exchange device as a physical object is provided that significantly enhances performance of the physical object and manufacturability efficiency. By obtaining target design criteria and defining a repeatable unit cell based on these criteria, the invention streamlines the optimization process. The method leverages a processing unit to perform shape optimization of solid structures within the unit cell, focusing on iterative modifications to achieve improved performance. This optimization is carried out until a predefined criterion or set of criteria (e.g. thermal performance threshold) or maximum number of iterations is reached. The outcome is an optimized design parameter set, ready for (e.g. direct) transfer to production equipment. This approach not only reduces computational resources by concentrating on a single unit cell level but also accelerates the development cycle, enabling rapid iteration and production of more complex systems with enhanced thermal efficiency.

The concept of utilizing target design criteria to define a unit cell, an important building block that repeats to form the entirety of the thermal energy transfer channel, provides significant advantages. This strategy of focusing on a singular, repeatable unit cell for optimization, rather than the whole structure at once, dramatically simplifies and streamlines the optimization process.

Shape optimization on the solid structures within each unit cell is performed. This process involves iterative modifications to the structures (cf. boundary surfaces) driven by a set of criteria (with e.g. thermal performance) as a primary focus. The optimization process is iterative, meaning it repeatedly refines the design, making incremental improvements towards an optimal solution. This iterative process continues until one of two conditions is met: either the design achieves a predefined threshold (e.g. one or more criteria such as preset thermal performance), indicating that the design is sufficiently optimized for its intended function, or a maximum number of iterations is reached, ensuring the process is bound by practical limits of time and computational resources.

Upon reaching the optimization criteria, the method outputs a set of optimized design parameters. These parameters encapsulate the geometric configurations of the solid structures within the unit cells and are prepared for transfer to production equipment. Optionally the data may be postprocessed prior to providing it to the production equipment. This seamless transition from digital optimization to physical manufacturing underscores the method's efficiency in bridging design and production. The focus on optimizing at the unit cell level represents a strategic decision to reduce the computational resources required for the process. By optimizing smaller, repeatable sections of the channel, the method significantly cuts down on the computational load, enabling quicker iterations and faster progression from concept to production-ready designs.

This approach inherently accelerates the development cycle of thermal energy transfer devices. Since the optimization process is more focused and requires less computational power, designers and engineers can iterate designs more rapidly. This speed in development does not come at the cost of simplicity; on the contrary, it facilitates the creation of complex systems. The ability to quickly produce and iterate on these optimized unit cells allows for the assembly of more intricate and efficient thermal energy transfer systems than would be feasible with a more traditional, whole approach to design optimization.

The performance may be a thermal performance, a hydraulic performance, a structural performance, etc.

Optionally, periodic flow equations are utilized to model fluid flow at each unit cell, the periodic flow equations ensuring similarity in fluid flow around each unit cell of the thermal energy transfer channel, and wherein periodic heat transfer equations are utilized to model heat transfer at each unit cell, the periodic heat transfer equations including both periodically varying and linearly varying components of the temperature field within the thermal energy transfer channel.

By employing periodic flow and heat transfer equations to model fluid flow and heat transfer within each unit cell, uniformity in thermal and fluid dynamics across all unit cells can be ensured, thereby guaranteeing a consistent and optimized thermal energy transfer across the channel. By incorporating both periodically and linearly varying components in the temperature field, the invention enables an improved simulation of thermal behaviors within the thermal transfer channel. This fosters the design of thermal transfer devices that are not only highly efficient but also predictive of actual performance, thereby reducing the need for extensive physical prototyping.

By employing periodic flow equations, the method guarantees that fluid flow around each unit cell is uniform, mirroring the flow dynamics throughout the thermal energy transfer channel. Similarly, periodic heat transfer equations ensure that the heat distribution and transfer mechanisms are consistent across all unit cells.

The inclusion of both periodically and linearly varying components in the temperature field allows for a modeling of thermal behaviors within the thermal energy transfer channel. This dual-component approach enables the simulation to closely mimic real-world thermal conditions, accommodating for variations in temperature. Such precision in simulation is instrumental in designing thermal transfer devices that perform as expected in real-world settings, ensuring reliability and efficiency.

The detailed and accurate modeling provided by this approach enables designers and engineers to validate the performance and efficiency of the thermal energy transfer channel virtually. This not only accelerates the development process by reducing the time and resources spent on iterative physical prototyping but also enables a more sustainable design process by minimizing material waste associated with prototype fabrication.

The periodic nature of these equations facilitates the modeling of fluid and thermal dynamics that repeat with each unit cell, ensuring that the behavior of the thermal energy transfer channel can be predicted with high accuracy based on the optimization and simulation of a single unit cell. The integration of linearly varying components further refines the simulation, allowing it to account for temperature changes in the main flow direction.

Optionally, the periodic heat equations account for incremental temperature change in a thermal transfer fluid as it passes through successive unit cells in the thermal energy transfer channel.

By focusing on the incremental temperature changes of the thermal transfer fluid as it navigates through successive unit cells, an important layer of precision to the optimization process is introduced that significantly enhances the method's utility and effectiveness.

By understanding how the temperature of the transfer fluid incrementally increases or decreases as it passes through each cell, the geometry of the solid structures within the cells can be fine-tuned to optimize thermal transfer. This can involve adjustments to the surface area, geometry, or distribution of these structures to facilitate e.g. more efficient heat absorption or dissipation, depending on the desired outcome.

Optionally, the optimization of heat transfer within the channel is guided by a set of periodically developed heat transfer equations. These equations account for both a linearly varying temperature gradient and a periodically varying component across each unit cell, which results from the constant heat flux applied at the bottom surface of the channel. The formulation of these equations involves the assumption that heat transfer and fluid flow reach a periodically developed state, allowing for the simplification of the thermal analysis over a single unit cell rather than the entire channel. This approach significantly reduces the computational complexity involved in optimizing the temperature distribution within the heat transfer device.

In some examples, the optimization process for enhancing heat transfer efficiency in a channel incorporates the utilization of periodically developed heat transfer equations. These equations are formulated to capture the dual nature of the temperature field within the channel, comprising a component that varies linearly due to a constant temperature gradient and another component that exhibits periodic variations across each unit cell. This periodic variation can be a direct consequence of the application of a uniform heat flux at a surface of each unit cell, symbolizing the heat input from an external source. By focusing on the temperature field's behavior within a singular unit cell, the model presumes the attainment of a periodically developed state for both heat transfer and fluid flow phenomena, thereby streamlining the thermal analysis process.

In some examples, the underpinning principle of the periodically developed heat transfer model is the bifurcation of the temperature field into two distinct parts: a linearly varying gradient, denoted by $\nabla T_{dev}$, and a periodically varying component, represented as $T^*(x)$. The constant heat flux imposed at the channel's bottom surface, characterized by a specified value qb, initiates a uniform thermal response within the unit cell, contributing to the periodic component of the temperature field. This formulation allows for a simplified yet comprehensive understanding of how heat is transferred and distributed within the channel, especially in the presence of a periodic structure.

In some examples, the energy conservation equation plays a crucial role in determining the temperature field within the unit cell. This equation accounts for the convection and conduction phenomena occurring within the fluid and solid domains, respectively. By incorporating parameters such as the fluid's density $\rho f$, specific heat capacity cf, and the thermal conductivity $k(x)$, which varies spatially to reflect the distribution of solid and fluid regions, the model meticulously captures the essence of heat transfer mechanisms. The energy conservation equation ensures that the sum of convective and conductive heat transfer rates equals the heat input from the external source, thereby maintaining energy balance within the system.

In some examples, boundary conditions tailored to the geometry and thermal characteristics of the unit cell supplement the periodically developed heat transfer equations. These include conditions specifying the heat flux across the bottom surface of the unit cell, which is directly exposed to the heat source, and the adiabatic conditions imposed on the remaining surfaces, indicating thermal insulation. Such meticulous definition of boundary conditions is pivotal in accurately simulating the thermal environment experienced by the unit cell, thereby guiding the optimization process towards configurations that ensure optimal performance.

In some examples, the optimization framework employs the average temperature gradient $\nabla T_{dev}$ and the periodically varying temperature component $T^*(x)$ to comprehensively characterize the thermal behavior of the unit cell under steady-state conditions. By determining these components, the model facilitates the prediction of temperature distribution patterns within the unit cell, thereby identifying optimized geometrical configurations that minimize thermal resistance and enhance heat transfer efficiency.

Optionally, the thermal optimization process involves solving for the temperature field within the channel, which is governed by the energy conservation equation applicable to a single unit cell. This equation encompasses both convective heat transfer, represented by the fluid's movement and its interaction with the temperature gradient, and conductive heat transfer, indicated by the thermal conductivity of the materials involved. The objective is to achieve an optimal balance between these modes of heat transfer, ensuring efficient cooling or heating performance of the device.

In some examples, the relationship between convective and conductive heat transfer mechanisms, as governed by the energy conservation equation can be tailored to a single unit cell. This dual-focus approach is designed to harness the synergies between the fluid's dynamic behavior, characterized by its movement and resultant interaction with temperature gradients, and the intrinsic conductive properties of the channel's materials. The aim is to intricately balance these heat transfer modes, optimizing the device's overall performance for either cooling or heating applications.

In these examples, the convective heat transfer component is driven by the fluid dynamics within the channel, where the movement of the coolant fluid facilitates the transfer of thermal energy. This process is important for dissipating heat from hotter regions to cooler ones, thus maintaining an efficient thermal management system. The optimization of convective heat transfer requires a detailed understanding of the flow field within the unit cell, necessitating computational simulations to predict how changes in channel geometry or flow conditions might influence performance.

Conversely, the conductive heat transfer component relies on the thermal conductivity of the channel's constituent materials. This aspect of heat transfer can be important in determining the rate at which heat can be conducted through the solid parts of the channel and across the fluid-solid interfaces. Optimizing conductive heat transfer involves selecting materials with appropriate thermal properties and designing the channel geometry to maximize the surface area available for heat conduction. This requires a careful balance, as too much solid material might impede fluid flow, while too little might not provide sufficient conductive pathways for heat transfer.

The optimization process may employ a mathematical formulation that encapsulates both convective and conductive heat transfer within a single unit cell. This formulation considers the periodically varying component of the temperature field, attributable to the constant heat flux applied (e.g. at the bottom surface of each unit cell), alongside a component that varies linearly with a constant gradient. The channel's design, such as the shape and distribution of solid structures within the fluid domain, can be effectively manipulated to modify the temperature field in a way that enhances performance.

The optimization process can leverage the concept of a periodically developed temperature field, governed by an energy conservation equation that accounts for both convective and conductive effects. This approach enables the precise manipulation of temperature gradients within the channel, ensuring that the thermal conductivity of materials and the fluid's velocity profile are optimized to achieve the desired heat transfer efficiency.

Moreover, boundary conditions can play an important role in this optimization process. These include specifying the heat flux at the channel's bottom surface, where the heat source is located, and ensuring adiabatic conditions on the remaining surfaces to prevent unintended heat loss. The objective function and constraints embedded in the optimization problem can be designed to minimize the average temperature at the heated surface, thereby maximizing the efficiency of heat removal from the heat source, all while maintaining the pressure drop across the channel within acceptable limits.

In addition to optimizing for the minimization of the average temperature on the heated surface, the present invention contemplates a plurality of other objectives that may be incorporated into the optimization framework. For instance, the optimization algorithm may also be configured to either maximize or minimize the temperature of the fluid at the outlet of the channel, depending on specific operational requirements. Furthermore, in some other examples, the method may involve optimizing for power density, defined herein as the rate of heat transfer per unit volume of the channel. This includes adjusting the geometric and/or material parameters of the channel to enhance the heat transfer efficiency while simultaneously maintaining the structural integrity and operational feasibility of the system. These objectives can be integrated into the optimization model either individually or in combination, providing a comprehensive approach to enhancing the performance of thermal management systems under various operational constraints.

In some examples, the optimization process seeks to determine the average temperature gradient across the unit cell, which is an important parameter for evaluating the efficiency of heat transfer within the channel. This gradient is derived from the specified heat flux and the volume-averaged velocity of the fluid, ensuring that the direction of the temperature gradient aligns with the main flow direction. By optimizing this gradient, the method aims to enhance the performance of the channel, particularly in applications requiring efficient heat dissipation or absorption.

In some examples, the periodically developed heat transfer equations are solved iteratively to refine the temperature distribution within the channel. This involves adjusting the shape and configuration of both the solid and fluid domains to improve performance, based on the constant heat flux condition and the thermal properties of the materials used. The optimization process is guided by numerical methods and software tools designed for thermal analysis, allowing for precise control over the design parameters to achieve desired heat transfer characteristics.

In some examples, the process of solving the periodically developed heat transfer equations is executed iteratively, focusing on refining the temperature distribution within the heat transfer channel. This iterative process can be important in optimizing the performance of the channel. It can involve adjustments to the geometry and layout of the solid and fluid domains within the unit cells that make up the channel. The optimization is particularly sensitive to the constant heat flux condition imposed at the channel's bottom surface, which directly influences the temperature distribution and, by extension, the overall performance of the device.

In these examples, the optimization leverages the distinct thermal properties of the materials constituting the solid and fluid domains. The objective can be for example to minimize the average bottom temperature of the channel for a given steady mass flow rate of fluid, ensuring that the pressure drop across the channel does not exceed a predetermined threshold. This can be achieved by methodically altering the shape of the solid domain, which, in turn, modifies the flow and temperature fields within the channel. The optimization accounts for the spatial periodicity of the material distribution, ensuring that the design improvements are uniformly applied across all unit cells in the channel.

In certain examples, it is contemplated that the constant heat flux condition, as imposed on the bottom surface of the heat transfer channel, may be modified to incorporate a different condition, for example a periodic heat flux condition. Such a modification is envisaged to allow for dynamic adjustment of thermal input. This periodic heat flux condition could be applied in a controlled manner, maintaining the predetermined intervals and amplitude variations.

The optimization process can employ numerical methods to solve the heat transfer equations, which govern the temperature field within the channel. These equations account for both a linearly varying part of the temperature field, due to a constant gradient, and a periodically varying part, attributed to the spatial periodicity of the heat flux at the bottom of each unit cell. The solution to these equations involves determining the average temperature gradient across the unit cell, based on the specified mass flow rate and heat flux, and ensuring that the temperature distribution meets the design objectives.

The use of finite element methods for discretizing the heat transfer equations allows for the accurate simulation of temperature fields within complex geometries. This facilitates a thorough exploration of design alternatives and the identification of optimal configurations that enhance the thermal efficiency of the heat transfer channel.

While the aforementioned finite element methods are exemplified, it should be noted that numerous other discretization methodologies exist and can be suitably employed. The selection of a particular discretization strategy may vary depending on specific requirements, such as computational resources, desired accuracy, or the particular characteristics of the heat transfer channel.

Moreover, the optimization process may include the application of boundary conditions that reflect the physical constraints of the heat transfer channel. These include conditions for the heat flux e.g. at the bottom surface of the channel, as well as assumptions about the adiabatic nature of the remaining wall surfaces. By solving the periodically developed heat transfer equations under these conditions, the optimization ensures that the heat transfer characteristics of the channel are finely tuned to deliver maximum performance.

In some examples, fluid flow through the heat transfer channel is determined by utilizing periodically developed flow equations. These equations are formulated to describe the behavior of an incompressible Newtonian fluid, characterized by its density and viscosity, moving through the designed structure of the channel. The flow equations incorporate a balance of forces, including the developed pressure field, viscous forces, and any applied forces, to accurately predict the velocity and pressure fields within the channel. This comprehensive approach ensures that the fluid mechanics are accurately represented in the optimization process, enabling the design of efficient heat transfer devices.

In some examples, the periodically developed flow equations are solved within the constraints of a single unit cell, leveraging the spatial periodicity of the material distribution. This methodology simplifies the optimization process by focusing on the behavior of the fluid within a representative section of the entire channel. The equations account for steady-state conditions and impose periodicity conditions on the velocity and pressure fields, ensuring that the fluid flow is consistently developed across the array of unit cells. The pressure field may have linearly varying component and a periodic component, where the latter satisfies periodicity conditions like the velocity field. By solving these equations, the design method can effectively determine the optimal shape of the fluid domain that minimizes energy loss and maximizes performance.

In some examples, the approach to solving the periodically developed flow equations within the constraints of a single unit cell takes into account the spatial periodicity of the material distribution. This strategic focus on a representative segment of the entire channel serves to streamline the optimization process, specifically by concentrating on the dynamics of fluid flow within this confined space. This provides the ability to model fluid behavior under steady-state conditions, cf. the flow and pressure distributions are not transient but remain constant over time.

To enforce consistency in fluid dynamics across the entire heat transfer channel, the periodically developed flow equations incorporate periodicity conditions for both the velocity and pressure fields. It is noted that the pressure field may be only partly periodic: it may have a linear component, characterized by a constant overall pressure gradient. These conditions mandate that the flow characteristics at any given point within a unit cell must be identical to those at corresponding points in adjacent unit cells. This repetitive pattern is crucial for the optimization process, as it allows for the prediction of fluid behavior throughout the channel based on the analysis of just one unit cell. By adhering to these conditions, the method ensures that the flow through the channel maintains a uniform profile, thereby avoiding disparities that could lead to inefficient thermal management.

The periodically developed flow equations are integral to identifying the optimal configuration of the fluid domain within the unit cell. This optimization aims to achieve the most efficient path for fluid flow, thereby reducing energy loss due to friction and turbulence. In practical terms, the equations help to delineate the shape and orientation of the solid structures within the unit cell that direct the flow. These structures, such as fins or baffles, are designed to facilitate heat transfer from the solid domain to the fluid while minimizing resistance to flow. By optimizing these structures, the design method seeks to enhance the overall performance of the heat transfer channel.

The process of solving these equations involves a detailed analysis of the fluid dynamics within the unit cell, taking into account various parameters such as fluid density, viscosity, and the imposed pressure gradient. The equations model the momentum conservation in the fluid, which is affected by forces such as pressure gradients and viscous forces, alongside the incompressibility condition that dictates a constant fluid volume. The consideration of these factors is important for accurately predicting the fluid's velocity and pressure distribution, which in turn informs the design of the unit cell's geometry.

When the mass flow rate is predefined, the resulting pressure gradient emerges naturally and varies linearly, shaping the pressure field without being explicitly imposed. Conversely, if the mass flow rate is not predetermined, the constant pressure gradient may be set to control the overall pressure drop or pumping power across the channel.

Moreover, the optimization process facilitated by these equations may be not a one-time calculation but an iterative procedure that progressively refines the design. Each iteration adjusts the shape and arrangement of solid structures within the unit cell based on the outcomes of the flow equations. This iterative approach ensures that the design converges towards an optimal configuration that achieves the desired balance between effective heat transfer and minimal fluid resistance.

Various suitable numerical methods to accurately represent the dynamics of the flow can be used. These methods include, but are not limited to, simple algorithms, PISO algorithms, and fractional step methods, which are implemented through a range of finite element types. While a variety of finite elements can be utilized, continuous Galerkin elements may be used in some examples due to their effectiveness in providing a robust numerical solution. This versatile approach allows for the fluid flow equations to be transformed into a system of algebraic equations that can be readily solved, ensuring the numerical simulation closely mirrors the realistic operational conditions of the heat transfer channel.

In some examples, to manage the complex nature of fluid flow within the optimized channels, the flow equations are discretized using mixed finite elements. This approach allows for a direct translation of the weak formulation of the flow equations into a solvable system of algebraic equations. The choice of finite elements, such as the Taylor-Hood elements for velocity and pressure fields, facilitates an accurate and efficient numerical solution to the flow equations. This discretization process can be important for better capturing the behavior of the fluid flow and ensuring that the optimization reflects realistic operational conditions of the heat transfer channel.

In some examples, to address the complexities of fluid flow in optimized channels, segregated flow algorithms are predominantly utilized instead of mixed finite elements. Segregated flow algorithms are less demanding in terms of computational resources, making them more suitable for large meshes and complex geometries that are typical in realistic operational conditions of heat transfer channels. This approach efficiently handles computational processes on most standard computing systems by simplifying the flow equations into a solvable system of algebraic equations without the extensive memory requirements of mixed finite element methods. Although mixed finite elements, such as the Taylor-Hood elements for velocity and pressure fields, can offer computational speed advantages on systems with ample memory, the use of segregated flow algorithms generally provides a more practical solution for managing fluid behavior and optimizing the design under typical hardware constraints.

Optionally, the initial geometric configuration of the at least one solid structure in the unit cell is formed by a pillar shape positioned between two parallel plates, serving as the top and bottom walls of the unit cell.

Such pillar shape positioned between two parallel plates within the unit cell serves as a strategic baseline for optimizing thermal flow and distribution within the channel. The pillar-and-plate setup is particularly advantageous for promoting efficient thermal energy transfer and fluid flow, laying a foundation for subsequent optimization processes. This predefined structure simplifies the optimization process by providing a solid starting point, which can be iteratively refined to meet the desired performance criteria.

The choice of a pillar-and-plate configuration as the starting point for optimization provides a clear, manageable baseline from which iterative adjustments can be made. The presence of a pillar between parallel plates creates a defined pathway for fluid flow, which can be important for controlling the transfer of thermal energy.

The pillar increases the surface area available for heat transfer between the solid structure and the fluid. This is beneficial because the efficiency of thermal energy transfer tends to improve with the amount of surface area through which heat can be transferred. The parallel plates confine the overall flow at the cost of little additional pressure drop. This directed flow ensures that more of the fluid comes into contact with the heated or cooled surfaces, enhancing the system's overall thermal efficiency.

The optimization process can iteratively adjust the size, shape, and position of the pillar, as well as the spacing between the plates, to enhance performance. This can involve adjusting the pillar's diameter to optimize the balance between conductive and convective heat transfer or modifying the plate spacing to control fluid velocity and pressure drop.

By starting with a predefined structure that already promotes efficient thermal transfer and fluid flow, the optimization process is simplified. Instead of searching through an unbounded geometric space, the optimization algorithm can focus on refining a promising configuration. This reduces computational complexity and speeds up the process of finding an optimized design. Furthermore, having a solid starting point increases the likelihood that the optimization process will converge on a highly effective design that meets or exceeds the desired performance criteria.

Optionally, the optimization is performed while adhering to predetermined constraints including at least a minimal material thickness of the at least one solid structure.

This constraint can ensure the structural integrity and durability of the thermal energy transfer channel, while also optimizing material usage. By adhering to these predetermined constraints, the method ensures the manufacturability of the optimized design.

Structural integrity can be important in thermal energy systems, as any compromise can lead to inefficiencies, potential failures, or safety hazards. By establishing a minimal threshold for material thickness, the invention guarantees that the solid structures can withstand operational stresses and thermal cycles without degrading or failing prematurely.

It will be appreciated that the computer-implemented method for optimizing geometric configurations of a thermal energy transfer channel as disclosed herein extends to the optimization of not only solid structures within a unit cell but also to encompass walls that define or are part of said solid structures, or connected/extending to/from the solid structures. It is expressly contemplated that the shape optimization process, incorporates the adjustment of boundary surfaces of at least one solid structure and/or walls within a single unit cell. This optimization process is subject to predetermined constraints to ensure structural integrity and operational efficacy. Specifically, these constraints include, but are not limited to, maintaining a minimal material thickness for the solid structures and/or walls subjected to the optimization process. This stipulation ensures that, while the geometric design of these elements is iteratively modified to enhance performance or meet other criteria set forth, they retain a threshold physical robustness.

Optionally, the minimal material thickness is determined by solving an Eikonal equation.

For maintaining minimal material thickness, the method involves solving an Eikonal equation. The solution to the eikonal equation yields a signed distance to a solid boundary at every point in the domain. This signed distance on its turn can be used to determine the minimal thickness of the solid material. Solving the Eikonal equation enables the method to optimize the geometric configuration of the thermal energy transfer channel in a way that conserves material without compromising performance.

In the context of optimizing the geometric configurations of thermal energy transfer channels, the pursuit of maintaining minimal material thickness represents an important consideration for achieving an optimal balance between material usage, structural integrity, and performance. The method's advantageous approach involves solving the Eikonal equation, a mathematical model traditionally associated with problems in wave propagation, computer vision, and robotics for calculating the time it takes for a wave to travel from one point to another in a medium.

The Eikonal equation facilitates the precise calculation of distances within the geometric space of the solid structures. By applying this equation, the method can accurately determine how material is distributed across the structure, ensuring that every part of the solid structure maintains the minimal thickness required for structural integrity. This precision can be important for avoiding overuse of material in areas where it's not needed, while ensuring sufficient material presence where it's important for the structure's stability and functionality.

Optionally, the optimization of the shape of the at least one solid structure within the unit cell is constrained for avoiding intersecting itself and to prevent merging of structures from resulting in negative volume elements or induced topology changes that compromise at least one of a structural integrity, functional performance, or manufacturability of the thermal energy transfer device.

This approach safeguards the structural integrity, functional performance, and manufacturability of the thermal energy transfer device. By imposing these constraints, the method achieves a balance between design freedom and practical feasibility, ensuring that the optimized design is not only theoretically optimal but also manufacturable and reliable in real-world applications.

It can be effectively prevented that the solid structures within the unit cell intersect with themselves and avert the merging of structures in a manner that can induce negative volume elements or unwarranted topology changes. Negative volume elements, arising from improper merging or intersection of design features, can lead to computational anomalies in the design process, rendering the optimization process inaccurate. Similarly, unintended topology changes can compromise the structural integrity and disrupt the desired fluid flow or thermal paths within the device, detracting from its functional performance.

The method ensures that each iteration of the design is not only moving towards thermal optimization but also remains within the realms of practical manufacturability and application.

By embedding practical manufacturing and operational constraints into the optimization algorithm, the method guides the design process towards solutions that are not only advantageous and optimized for performance but also feasible for manufacturing and robust in operation.

Optionally, remeshing is performed after one or more iterations of boundary surface modification of the at least one solid structure within the unit cell, wherein the remeshing is configured to handle the merging of discrete geometric entities into a single mesh structure.

In some examples, a remeshing step is performed after one or more iterations of boundary surface modification, which can be important for managing the complexity of discrete geometric entities as they converge into a single mesh structure. This process can be important for maintaining the integrity and accuracy of the model throughout the optimization process. Remeshing facilitates the smooth transition of separate geometric entities into a cohesive optimized structure, ensuring that the computational model accurately represents the intended design. This capability can be important for achieving high precision in the optimized design parameters, thereby enhancing the manufacturability and performance of the thermal energy transfer channel.

As the optimization process progresses, the geometric entities within the unit cell can become increasingly complex. Remeshing simplifies these entities into a manageable computational model, ensuring that the complexity does not exceed the capabilities of the processing unit or the software used for the optimization.

The integrity of the computational model can be important for achieving an accurate representation of the intended design. Remeshing ensures that the changes made during the optimization process are accurately reflected in the model, preserving the fidelity of the design intentions. This accuracy is important for predicting the performance and manufacturability of the optimized design.

As discrete geometric entities merge or change shape, remeshing facilitates a smooth transition into a cohesive optimized structure. This transition can be important for maintaining a continuous and unified model that can be efficiently analyzed and used for further optimization iterations. Without remeshing, the model can become fragmented or inconsistent, leading to errors in optimization or difficulties in interpretation.

After optimization, a set of design parameters that represent the optimal geometric configuration of the thermal energy transfer channel can be obtained. The precision of these parameters directly impacts the manufacturability and performance of the final product. Remeshing plays an important role in achieving this precision, ensuring that each modification to the boundary surfaces is accurately captured and reflected in the design parameters.

The accurate and precise representation of the optimized design facilitated by remeshing enhances the manufacturability of the thermal energy transfer channel. Production equipment can more reliably interpret and fabricate the design when it is based on a coherent and accurate model. Moreover, the performance of the thermal energy transfer channel is directly influenced by the precision of the optimization process. Remeshing ensures that the design achieves the highest possible thermal efficiency by accurately implementing the intended optimizations.

Optionally, the production equipment comprises at least one of an additive manufacturing system, or an etching system, which is capable of fabricating at least parts of the thermal energy transfer channel with $N1 \times N2$ identical unit cells based on the optimized design parameters.

The optimized design parameters outputted by the method can be transferable to production equipment, including additive manufacturing systems or etching systems. This compatibility with manufacturing technologies underscores the practical applicability and versatility of the optimized design. By enabling a seamless transition from design optimization to physical manufacturing, the method significantly accelerates the production process, reduces manufacturing costs, and ensures that the thermal energy transfer devices are produced with high fidelity to the optimized design. This integration of design and manufacturing processes represents a substantial advancement in the field of thermal energy transfer systems, facilitating the rapid production of highly efficient and complex designs.

By streamlining the design to manufacturing pipeline, the method inherently reduces labor costs and minimizes the risk of errors that can lead to material waste. Additive manufacturing and etching systems, known for their precision, further optimize material usage and reduce waste. Moreover, the method's efficiency in optimizing designs for performance can lead to cost savings in the materials used, as designs can be optimized for minimal material use without sacrificing performance. These factors combined contribute to a notable reduction in overall manufacturing costs.

The optimized designs are realized with high fidelity owing to the precision capabilities of additive manufacturing and etching technologies. These production technologies can accurately reproduce the complex geometries and fine details specified by the optimized design parameters. This fidelity can be important for the performance of thermal energy transfer devices, where nuances in geometry can significantly impact thermal efficiency. High fidelity in production ensures that the performance benefits realized during the optimization process are fully retained in the manufactured product.

By integrating design optimization directly with manufacturing, a more iterative and dynamic development process can be obtained, where designs can be quickly optimized, prototyped, tested, and refined. Such a workflow is particularly advantageous for the development of complex and high-performance thermal energy transfer systems, enabling rapid innovation and iteration.

Optionally, a plurality of unit cells are arranged in a matrix configuration, each unit cell defining therein an individual thermal transfer element within the thermal energy transfer channel, the thermal transfer element being surrounded by thermal fluid.

This arrangement allows for precise control over thermal transfer characteristics at a granular level, enabling the design of complex thermal management systems with enhanced performance. The individual optimization of each unit cell within this matrix further ensures that the overall system achieves optimal thermal transfer efficiency. This method leverages the concept of modularity, where each unit cell, defined as an individual thermal transfer element surrounded by thermal fluid, contributes to the overall thermal management objective. The essence of this arrangement lies in its ability to enhance the thermal efficiency and scalability of the thermal energy transfer channel, thereby accommodating a wide range of thermal management needs with heightened effectiveness.

The matrix configuration of unit cells facilitates a uniform and controlled thermal energy distribution across the entire channel. Each unit cell acts as a discrete, optimized thermal management node, collectively ensuring that thermal energy is transferred efficiently throughout the system. This granularity in thermal management enables the system to achieve superior thermal efficiency by minimizing thermal resistance and optimizing thermal pathways across the channel.

Depending on the thermal management requirements, the system can be scaled up or down by adjusting the number of unit cells within the matrix. This flexibility allows the thermal energy transfer system to be precisely tailored to specific application needs, ranging from small electronic devices to large industrial machinery, without compromising on efficiency or performance.

The individual optimization of each unit cell enables precise control over the thermal characteristics at a granular level.

Optionally, the geometric shape optimization of solid structures of the thermal energy transfer channel at a unit cell level employs a gradient-based optimization technique that uses adjoint-based optimization for calculating gradients during the iterative process, wherein the gradient-based optimization technique is used to iteratively adjust the shape of the at least one solid structure, and wherein shape sensitivities derived from the adjoint-based optimization are used to guide shape modifications.

The use of shape sensitivities derived from adjoint-based optimization to guide shape modifications ensures that each iteration brings the design closer to the optimal configuration, maximizing performance while adhering to design constraints. Gradient-based optimization is a mathematical approach used to find the minimum or maximum of a function. In the context of optimizing thermal energy transfer devices, this function can represent various performance metrics, such as thermal efficiency, structural integrity, or material usage. The gradient of this function provides the direction and magnitude of the steepest ascent (or descent), guiding the optimization process towards the function's extremum by iteratively adjusting the design parameters.

The combination of gradient-based optimization with adjoint-based calculation offers unparalleled precision and efficiency. This is because adjoint-based optimization allows for the computation of gradients for all design parameters simultaneously with only a slightly greater computational effort than solving the original problem. This efficiency makes it feasible to optimize complex designs, where traditional methods would be prohibitively expensive in terms of computational resources.

Shape sensitivities indicate how small changes in the geometry of the solid structures affect the performance metric being optimized. By utilizing these sensitivities, each iteration of the design adjustment process can be guided more accurately, ensuring that modifications are both purposeful and effective in moving towards the optimal design.

An important benefit of this optimization technique is its ability to balance the maximization of performance with adherence to various design constraints. Constraints can include maximum or minimum material thickness, structural integrity under load, manufacturability considerations, and compliance with operational parameters. The precision of the adjoint-based method ensures that the optimization does not stray into infeasible design spaces, maintaining compliance with these constraints while pursuing the optimal design.

Optionally, the set of criteria for optimization includes constraints based on operating conditions, namely at least one of a maximum pumping power, a maximum pressure drop requirement, or fixed mass flow rate.

By integrating these operational constraints into the optimization, the method ensures that the optimized design not only meets performance goals but also adheres to practical operational limits. This comprehensive approach to optimization ensures that the thermal energy transfer channel is not only highly efficient but also fully compatible with intended operational environments, thereby enhancing the usability and applicability of the optimized design.

The constraint on maximum pumping power ensures that the optimized design does not necessitate an excessive amount of energy to move the thermal transfer fluid through the channel. This can be important for maintaining energy efficiency and operational cost-effectiveness. By limiting the pumping power, the method promotes the development of designs that contribute to sustainable operations, reducing the overall energy consumption of the system.

Incorporating maximum pressure drop requirements into the optimization process addresses the potential issue of excessive resistance to fluid flow within the thermal energy transfer channel. High pressure drops can lead to increased operational costs and may necessitate more powerful and expensive pumping systems. By setting a constraint on the maximum allowable pressure drop, the optimization process ensures that the channel design maintains fluid flow within acceptable limits, balancing performance with energy and cost efficiency.

The constraint on a fixed mass flow rate serves a dual purpose. First, it guarantees that the design is optimized for a specific flow rate, ensuring that the thermal energy transfer channel can achieve desired performance under predefined conditions. Additionally or alternatively, it can simplify compatibility with existing systems and operational parameters, making it easier to integrate the optimized channel into a wider range of applications without necessitating additional modifications to accommodate variable flow rates.

By embedding these operational constraints directly into the optimization framework, the method achieves a balance between achieving high performance and adhering to practical operational limits. This whole approach ensures that the optimized designs are not only optimal/improved in terms of thermal efficiency but are also viable from an operational standpoint. It acknowledges the complex interplay between performance, energy consumption, and operational costs, guiding the optimization process towards solutions that are feasible and efficient in real-world scenarios.

According to an aspect, the invention provides for a system for optimizing geometric configurations within a thermal energy transfer channel of a physical object, comprising: an input module configured to obtain target design criteria of the physical object; a design module configured to define, based on the target design criteria of the physical object, a unit cell dimensioned such that the thermal energy transfer channel is formed by N1 × N2 identical unit cells; a processing unit configured to perform shape optimization of solid structures in the thermal energy transfer channel at the unit cell level, wherein the geometric design of structures of a single unit cell is optimized based on a set of criteria including at least performance, and wherein the shape optimization involves iterative modification of the boundary surfaces of at least one solid structure within the single unit cell, with the shape optimization of the single unit cell being performed until a stop criterion is met, the stop criterion defined as achieving a predetermined threshold of performance or reaching a maximum number of optimization iterations; an output module configured to output optimized design parameters representing the geometric configuration of solid structures in each unit cell of the thermal energy transfer channel; and a data transfer module configured to transfer data based on the outputted optimized design parameters to production equipment for manufacturing an optimized physical object representing the thermal energy transfer channel with N1 × N2 identical unit cells.

In some examples, the generation of optimized unit cells that form heat transfer channels through a stacking process is enabled. These channels are designed to maximize the performance of heat transfer devices by optimizing the three-dimensional shape of the channel walls and the solid material within each unit. The process allows for the construction of the entire heat transfer device from these optimized units, arranged in two- (e.g. N1×N2) or three-dimensional arrays (e.g. N1×N2×N3). This approach significantly reduces the computational resources and time required for the design process, making it suitable for applications where the heat transfer device needs to cover a large surface area, such as for example cooling systems for electronic devices.

In some examples, the optimization of the heat transfer channel's design involves managing the channel's dimensions, including its length, width, and height, while ensuring the solid walls confine the fluid flow within a minimal thickness. The design also addresses the distribution of solid material within the channel, subject to a constant heat flux at the bottom surface, with the aim of minimizing the average bottom temperature under a specified mass flow rate of fluid. This necessitates adjusting the entire shape of the solid and fluid domains within the channel to optimize flow and temperature fields. Mathematical formulations of the design problem may encompass constraints related to fluid dynamics and heat transfer, highlighting the necessity of adhering to conservation laws and geometric conditions.

In some examples, the optimization process is defined by a set of periodically developed flow equations, applicable to an incompressible Newtonian fluid. These equations are important in determining the velocity field and pressure field within a single unit cell by adhering to conditions of steady and periodically developed flow. This approach involves solving a complex system of equations that capture the behavior of the fluid flow through the channel, taking into consideration factors such as fluid density, viscosity, and the imposition of a constant average pressure gradient. The goal is to meet specific flow rate requirements while maintaining the spatial periodicity of the material distribution.

In some examples, the heat transfer optimization also includes solving periodically developed heat transfer equations. These equations account for the temperature field within the channel, consisting of a linearly varying part and a periodically varying part due to the constant heat flux at the bottom of each unit cell. The average temperature gradient may be determined based on the heat flux and the volume-averaged velocity over the unit cell. Conditions for these equations can ensure that heat transfer is optimally managed within the constraints of the channel's design, aiming for efficiency in cooling performance.

In some examples, the optimization process incorporates geometrical constraints to ensure the admissibility of the solid domain's shape within each unit cell. Constraints include the specification of the centroid of the solid domain, control over the minimal thickness of the solid material, and restrictions on the deformation of points on the solid boundary to remain within the unit cell domain. These constraints can be important for maintaining the structural integrity and functional performance of the heat transfer channel.

In some examples, an Augmented Lagrangian method is employed to solve the constrained minimization problem associated with the design optimization. This method allows for the conversion of the problem into a sequence of simpler subproblems, facilitating the iterative refinement of design parameters. The process involves adjusting multipliers and penalty terms to ensure that both equality and inequality constraints are satisfactorily met, guiding the optimization towards effective solutions that enhance the performance of the heat transfer channel.

In some examples, numerical solutions to the design problem are obtained by discretizing the state equations using finite-element methods and solving them through software frameworks designed for this purpose. This may involve detailed consideration of mesh resolutions, discretization of periodic flow equations, and application of deformation fields to optimize the shape of the solid and fluid domains.

According to an aspect, the invention provides for a method for constructing a thermal energy transfer device, comprising the steps of: obtaining target design criteria of the thermal energy transfer device, wherein, based on the target design criteria of the physical object, a unit cell is defined which is dimensioned such that the thermal energy transfer channel is formed by N1 × N2 identical unit cells; optimizing the shape of the at least one solid structure at a single unit cell level using the computer-implemented method of the invention; assembling the optimized unit cells into a thermal energy transfer device according to predefined design specifications of the thermal energy transfer device; and wherein the unit cell structures are manufactured using additive manufacturing, etching, or hydroforming.

For instance, both additive manufacturing, commonly known as 3D printing, and etching techniques excel in handling intricate geometries with high precision. This capability can be important for fabricating components with optimized designs that often feature complex structures and patterns, which are challenging to produce through traditional manufacturing methods. The ability to construct thermal energy transfer channels with N1 × N2 identical unit cells, leverages the strengths of these technologies. Additive manufacturing allows for layer-by-layer construction, enabling the creation of components with complex internal geometries without the need for assembly or welding. Similarly, etching can create precise patterns and structures at the microscopic level. Together, these technologies facilitate the streamlined production of thermal energy transfer devices with optimized design parameters.

It will be appreciated that, the additive manufacturing and etching systems may be advantageously employed to fabricate a mold, or a similar device, tailored for the mass production of structures on a per unit cell basis. Such an approach leverages the precision and versatility inherent in additive manufacturing and etching processes to create molds or devices that precisely mirror the optimized geometries of the unit cells. This enables the mass production of these intricate structures through more traditional manufacturing techniques, such as casting or stamping, which may offer advantages in terms of scalability and cost-effectiveness. Consequently, the creation of such molds or devices not only exemplifies a novel application of additive manufacturing and etching technologies but also significantly enhances the manufacturability and commercial viability of the thermal energy transfer devices designed with optimized parameters, thereby extending the utility of the disclosed method beyond the direct fabrication of individual components.

It will be appreciated that the disclosed computer-implemented method is not limited to the production equipment explicitly listed, such as additive manufacturing systems or etching systems. Indeed, the scope of the invention encompasses the utilization of more conventional manufacturing methods which are equally capable of fabricating at least parts of the thermal energy transfer channel with N1 × N2 identical unit cells based on the optimized design parameters. Such conventional manufacturing methods may include, but are not limited to, various metal forming techniques such as sheet metal stamping, roll forming, die casting, and extrusion among others. These methods, known for their robustness and widespread industrial application, can provide alternative avenues for achieving the structural and functional requirements of the thermal energy transfer channel, thereby enhancing the versatility and applicability of the method across different manufacturing paradigms and industries. This inclusivity of conventional manufacturing processes further exemplifies the invention's adaptability and broad applicational scope, catering to diverse production environments and capabilities.

According to an aspect, the invention provides for a thermal energy transfer device constructed employing the method according to the disclosure, wherein the thermal energy transfer device comprises a matrix of structures arrayed in at least one dimension, these structures are derived from a single unit cell model that has been subjected to one or more optimization process.

According to an aspect, the invention provides for a method for optimizing the structure of a component in a device, including: collecting design goals for the device; determining, in accordance with these goals, a modular element whose dimensions allow the component to be constructed from a grid/matrix of these elements; implementing, using a computing processor, a structural optimization process for the component at the level of the individual modular element. This may include refining the design of one modular element with an emphasis on a key performance criterion. The method may include iterative adjustments in the material configuration of the modular element and may be conducted until a specific performance target is achieved or a set number of iterations is completed. The method further includes producing optimized structural parameters that describe the material composition in each modular element of the component; and transmitting information based on these optimized parameters to fabrication systems for the production of an optimized device comprising the component formed from the repetitive arrangement of the modular elements.

According to an aspect, the invention provides for a computer-implemented method comprising creating a database of optimized unit cells according to the above optimization process, and employing a selection model that is configured to select the most suitable unit cell in the database for a given/target scenario.

In some examples, a database of optimized unit cells is created, wherein a selection model is employed that is configured to select the most suitable unit cell in the database for a given scenario.

It will be appreciated that throughout this disclosure, the term "thermal energy transfer channel" may also be interchangeably referred to as a "heat transfer channel." This nomenclature reflects the fundamental understanding that heat transfer inherently involves the flow or transfer of thermal energy across the boundaries of a specified system or channel. In this context, the heat transfer channel is conceptualized as a medium or pathway through which thermal energy is exchanged between different materials or environments. This exchange can occur through various mechanisms, including but not limited to, conduction, convection, and radiation. The choice of term, whether it be "thermal energy transfer channel" or "heat transfer channel," is intended to encompass all such mechanisms and the diverse applications in which they may be employed. This inclusive definition recognizes the interchangeable use of these terms in the field and aligns with the established principles of thermodynamics and heat transfer technology.

It will be appreciated that any of the aspects, features and options described in view of the methods apply equally to the system and the described thermal energy transfer device. It will also be clear that any one or more of the above aspects, features and options can be combined.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:

Fig. 1 shows a schematic diagram of a top view of an arrangement of unit cells;
Fig. 2 shows a schematic diagram of a perspective view of an arrangement of unit cells;
Fig. 3 shows a schematic diagram of a perspective view of an arrangement of unit cells with solid structures therein;
Fig. 4 shows a schematic diagram of a perspective view of an arrangement of unit cells with solid structures therein;
Fig. 5 shows a schematic diagram of a method for obtaining optimized unit-cell topologies for an exemplary cooling channel; and
Fig. 6 shows a schematic diagram of a method.

DETAILED DESCRIPTION

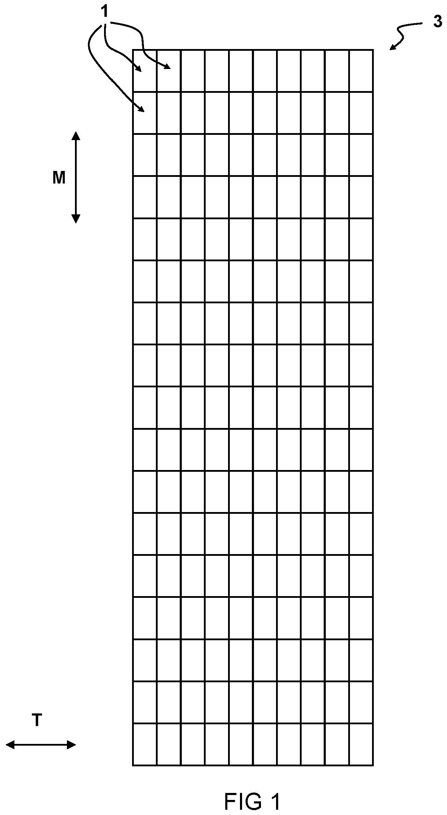

Fig. 1 shows a schematic diagram of a top view of an arrangement of unit cells 1 defined in a computer-implemented method for optimizing geometric configurations of a thermal energy transfer channel as a physical object. In this method, target design criteria of the physical object are obtained. Further, based on the target design criteria of the physical object, a unit cell is defined which is dimensioned such that the thermal energy transfer channel is formed by $N1 \times N2$ identical unit cells. Further, by means of a processing unit, a shape optimization of solid structures in the thermal energy transfer channel 3 is performed at the unit cell level, wherein the geometric design of structures of a single unit cell is optimized based on a set of criteria including at least performance. The shape optimization involves iterative modification of the boundary surfaces of at least one solid structure within the single unit cell, and wherein the shape optimization of the single unit cell is performed until a stop criterion is met, the stop criterion being defined as achieving a predetermined threshold of performance or reaching a maximum number of optimization iterations. Further, the method involves outputting optimized design parameters representing geometric configuration of solid structures in each unit cell of the thermal energy transfer channel. Further, data is transferred based on the outputted optimized design parameters to production equipment to manufacture an optimized physical object representing the thermal energy transfer channel with $N1 \times N2$ identical unit cells 1.

In this example, the unit cells are arranged in a 2 dimensional array. Such a matrix arrangement, can result in a spatially periodic structural arrangement along at least a main flow direction M and a transversal direction T of the thermal energy transfer channel.

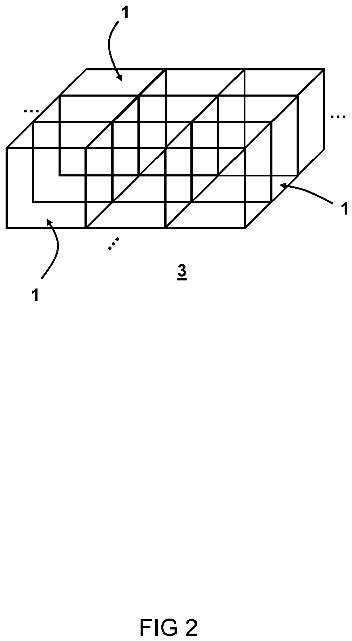

Fig. 2 shows a schematic diagram of a perspective view of an arrangement of unit cells 1. This example illustrates that within a unit cell 1, a three-dimensional shape optimization may be performed. Only a number of a total number of unit cells are shown. The thermal energy transfer channel 3 may be subdivided in a number of unit cells, and advantageously, the shape optimization may be performed for a single unit cell.

Instead of performing a complete shape optimization, unit cells are defined and used for optimization at smaller scale. The thermal transfer channel can be constructed from a matrix of unit cells. Since there is a repetition pattern, the optimization is performed at the unit cell level instead of a full optimization for an entire channel. This not only significantly reduces the required computing power, but also allows the repetition (pattern) to be enforced while performing the shape optimization. The structural geometries and dimensions, cf. "shapes", are optimized at the level of a unit cell, which is then repeated repetitively in a channel.

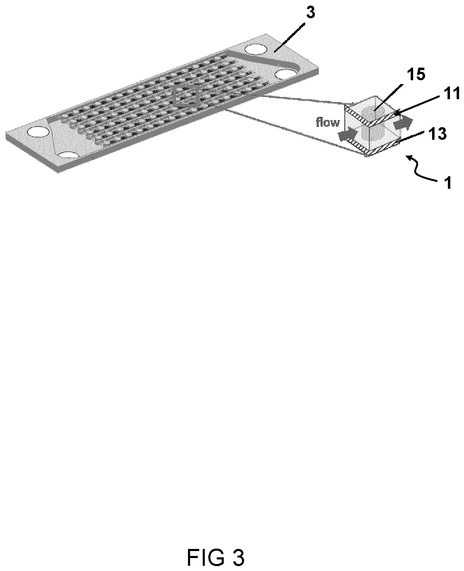

Fig. 3 shows a schematic diagram of a perspective view of an arrangement of unit cells 1 with solid structures 5 therein. As can be seen, for each unit cell the same structure is employed, building up the entire thermal energy transfer channel 3.

The shape of individual cell units 1, which can be stacked together to form heat transfer devices, can be optimized. As only a single cell unit 1 is optimized, instead of the entire channel, the design method is computationally very cheap and results in a fast design cycle. This makes the design method especially suitable for designing heat transfer devices with a large surface area. This is advantageous when the device to be cooled (e.g. a computer chip or electronic device) has a large area.

Conventional three-dimensional shape optimization methods for cooling/heating channels are only suitable for optimizing the entire material distribution of a cooling/heating devices at once, which is computationally very expensive. Usually, supercomputer infrastructure with hundreds to thousands of cores is required, and weeks of computational time. The computer-implemented method according to the disclosure enables generating optimized units for constructing heat transfer channels 3, e.g. containing a single flow. The three-dimensional shape of the channel walls and solid material within the unit cell 1 is optimized to obtain maximal performance of the heat transfer device. The optimized unit cells 1 (cf. optimized configuration) can be stacked in a two- or three-dimensional matrix or array to construct the entire heat transfer device. As such, each channel contains an array of optimized solid structures or fins in a periodic configuration. Various alternative arrangements and configurations are envisaged.

In fig. 3, the heat transfer device to be manufactured includes a single channel 3 which is constructed of identical unit (cells) stacked in a two-dimensional matrix or periodic array. The shape of the solid structure and channel walls in the unit cell has been optimized. However, various other design criteria may be employed.

It will be appreciated that when the channel's aim is to cool a certain heat source by means of a coolant flow, the device may be called a heat sink or cold plate. Nevertheless, the channel may also serve to heat up a certain fluid flow.

It will be appreciated that the terminology "fins" may refer to all solid material apart from the channel walls, which conduct the heat from the heat source to the fluid.

It will be appreciated that maximal performance in the case of a coolant channel may be understood as achieving the lowest possible temperature at the bottom of the cooling channel, which is in contact with the heat source to be cooled, for a given maximum allowable pumping power (or pressure drop) for the coolant flow. Nevertheless, the design method can also deal with a variety of other performance criteria and other constraints, for instance a minimal channel thickness, a minimal "fin" thickness, as well as a given mass flow rate of coolant.

The optimized three-dimensional shape is usually rather complex, so manufacturing of the resulting heat exchanger may require advanced manufacturing techniques based on additive manufacturing, etching, hydroforming, or the like.

In fig. 3, one unit cell 1 is shown in detail (zoomed in). As can be seen, the unit cell incorporates a top wall 11 , a bottom wall 13, and a solid structure 15 (e.g. fin) therein.

In some examples, the method requires at least the following input specifications related to the choice of coolant and the choice of channel material(s) and the available space:

- fluid properties: density, dynamic viscosity, Prandtl number, and/or thermal conductivity
- channel material: thermal conductivity;
- overall channel dimensions: the overall width, height and length of the box in which the coolant channel should fit.

In addition, in some examples, the following specifications may (need to) be supplied:

- The heat load from the heat source to be cooled (often expressed in Watt/cm$^2$) in case of cooling channel.
- The desired temperature increase of the fluid to be heated in case of a heating channel.
- The maximum allowable pumping power or pressure drop for the flow.

Optionally, in some examples, also the following information may be supplied for the generated design:

- The desired mass flow rate of coolant to be used.
- The minimal solid thickness: i.e. the smallest manufacturable size of the fins or solid walls, depending on the additive manufacturing process or etching process. Alternatively, it may be determined based on structural (stress) constraints.
- The number of units to be employed, along the length or width of the channel (or its periodic "fin" array).

The output of the computer-implemented method may be a complete description of the three-dimensional geometry and shape of the solid material (structures/fins/channels) in the optimized unit, and as such the entire heat transfer device. The optimized shape of the solid material can for example be represented in many formats, for instance a table of vertices with their coordinates (x,y,z) and their connectivity (facets). In some examples an output file format is outputted that can be loaded in a Computer-Aided Design (CAD) program.

In some examples, boundary conditions play an important in the formulation of the heat transfer optimization problem. These conditions include specifying the heat flux at the bottom surface of the channel, which directly impacts the temperature distribution within the unit cell, and assuming adiabatic conditions on the remaining surfaces to prevent external heat exchange. These boundary conditions can be important for accurately modeling the heat transfer behavior within the channel and can be integral to the optimization process.

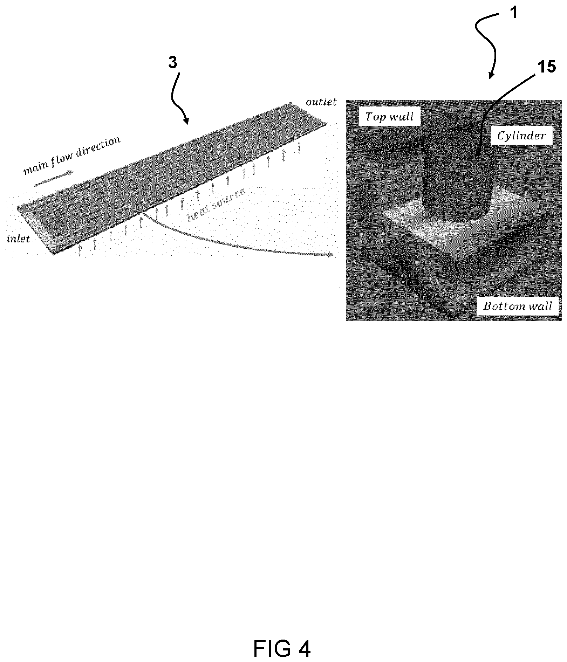

Fig. 4 shows a schematic diagram of a perspective view of an arrangement of unit cells 1 with solid structures 5 therein. In some examples, first the overall dimensions of the heat transfer device, the total number of channels and/or a total number of units in the channel are provided, from which the dimensions of the (box-shaped) unit cell are determined.

An example of a cooling channel with a single fluid flow is shown. As can be seen in a zoomed in section of the figure, each unit cell contains two flat plates forming the bottom and top wall of the channel. In between, a cylinder structure is present. The initial shape of the solid material in the unit cell may strongly affect the optimization process. The initial shape may consist for instance of two parallel plates, which form the channel's top wall and bottom wall, as shown in fig. 4. Between the top and bottom wall, a cylindrical solid fin may be present, for instance. The remaining sides of the unit cell may then serve as inlets and outlets for the fluid flow, at least if the side walls of the channel are not considered within the unit cell. In some examples, there will be just one single fluid flowing in one specified direction.

Once the design targets (performance measures) and constraints (material properties, pressure drops, ...) are specified, the design method can automatically generate an optimized unit (cell), which can be stacked to construct the entire heat transfer device.

The initial shape of the solid material (and hence the boundary of the fluid-solid interface) can be gradually optimized in a stepwise approach to maximize the performance of the heat transfer device. This optimization process is done in an automated way, by relying on a specific computational fluid dynamics (CFD) model, combined with a matching optimization method (e.g. adjoint-based).

The CFD model serves to predict the flow and temperature field for the fluid and the solid material at a reduced computational cost, so that the resulting performance (e.g. the total heat transfer rate, or wall temperature and pumping power) can be calculated.

The adjoint-based optimization method uses the information from the CFD model to modify the intermediate shape such that an incremental increase of performance is obtained at each step. In particular, the adjoint-based optimization method yields the sensitivity (or gradient) of the performance measures with respect to the shape of the solid material (in the unit cell). These shape sensitivities (also called shape derivatives or shape gradient) are subsequently provided to a gradient-based optimization algorithm to obtain a suitable modification or update of the intermediate shape.

The employed CFD model predicts the flow and temperature field in the channel under the assumption of streamwise periodicity from one unit to another. In some examples, the CFD model accounts for the laminar flow regime, although the inclusion of an additional model for the turbulent flow regime is also possible. The model may account for the overall temperature rise or decrease (the net temperature gradient) over each unit cell, as well as the local (periodic) temperature variations in the unit cell.

In some examples, the gradient-based optimization algorithm relies on a so-called augmented lagrangian approach. The integration of the CFD model, adjoint-based optimization method and the gradient-based optimization algorithm into an effective shape optimization framework, can provide for a robust and efficient design and manufacturing process.

In some examples, in order to enforce minimal thickness constraints for the optimized shape, the thickness of the solid material can be determined by solving an Eikonal equation for the material distributions of both fluids and solid.

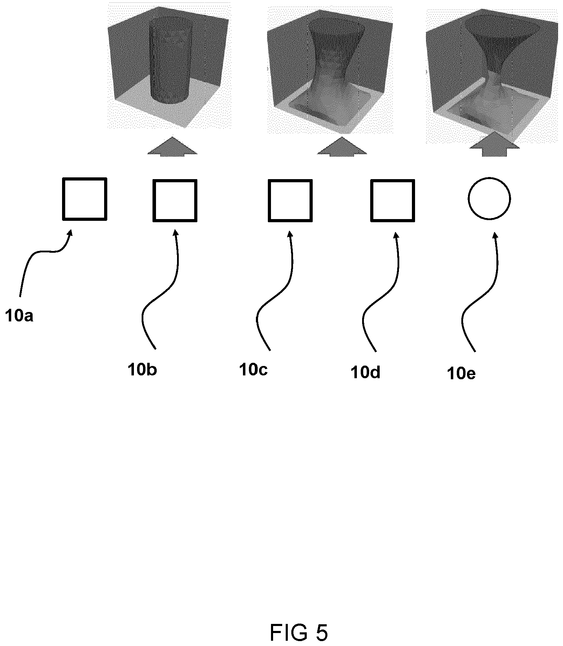

Fig. 5 shows a schematic diagram of a method 10 for obtaining optimized unit-cell topologies for an exemplary cooling channel. However, the method 10 can also be used for obtaining other optimized thermal transfer objects, such as heat exchanger channels. First, target design criteria 10a for the physical object (i.e. cooling channel) are obtained. Then, an initial design 10b of the unit cell is defined. In this example, a reduced CFD model 10c is employed, which outputs the results to an optimizer 10d that is configured to perform topology optimization for the unit cell. This is repeated until an optimized design 10e is obtained. This is optimized design 10e at unit cell level is then used for the complete cooling channel built up from an arrangement of unit cells each having the topology optimized structure therein.

An adjoint-based shape optimization framework may be employed. The model equations for the flow and temperature may be discretized using for example a finite-element discretization method. For example, a continuous Gallerkin method of first and second order may be employed. To solve the discretized flow equations, a coupled and segregated approach for the (periodic) Navier-Stokes equations (e.g. Newton, Simple and Fractional Step algorithms) may be used.

The optimization framework itself may rely on the augmented Lagrangian approach for the following design problem:

$$\min_{\Omega \in \Omega_{ad}} J(\boldsymbol{q}, \Omega)$$

$$s.t. \ \boldsymbol{R}(\boldsymbol{q},\Omega) = 0$$

$$\boldsymbol{h}\ (\boldsymbol{q},\Omega) = 0$$

$$\boldsymbol{g}(\boldsymbol{q},\Omega) \leq 0$$

$$\mathrm{bc}(\Omega) = 0$$

Here, the cost function J is the negative of the heat transfer device performance. R corresponds to the CFD model for the flow and temperature (as well as the eikonal equation for the minimal thickness of the solid material), while h and $\boldsymbol{g}$ denote the equality and inequality constraints (for instance the pressure drops). The physical state vector is denoted by q = ($\boldsymbol{u}, p, T$), while the shape of the heat transfer unit is denoted by $\Omega$. We note that the barycenter of the shape may be fixed, i.e.

$$\mathrm{bc}(\Omega) = \frac{1}{\mathrm{vol}(\Omega_f)}\sum\int \boldsymbol{x}\cdot\boldsymbol{e}_i\,d\Omega_f - \bar{x} = 0$$

bc($\Omega$) = 0 with

The former design problem can be solved by minimizing the following functional, the so-called augmented lagrangian:

$$\min_{\boldsymbol{q},q_{adj},\,s,\Omega} L_{aug}(\boldsymbol{q},\Omega) = \ J(\boldsymbol{q},\Omega) + \langle q_{adj}\boldsymbol{R}(\boldsymbol{q},\Omega)\rangle_\Omega \ + \ \sum\lambda_i h_i + \sum\lambda_j(g_j \ + s_j) +$$

$$\sigma_h\sum h_i^2 + \sigma_g\sum\big(g_j + s_j\big)^2 + \sigma_{bc}bc^2,$$

where we recognize the multipliers $\lambda_i$, slack variables $s_j$ and penalties $\sigma$.

The adjoint state vector $\boldsymbol{q}_{adj}$ in the former augmented lagrangian $L_{aug}(\boldsymbol{q}, \Omega)$ is the solution of the following adjoint model:

$$\left\langle q_{adj},\frac{\partial}{\partial q}\boldsymbol{R}(\boldsymbol{q},\ \Omega)\delta\boldsymbol{q}\right\rangle_\Omega = -\left\langle\frac{\partial}{\partial q}\Big(L_{aug}(\boldsymbol{q},\Omega) - \langle q_{adj}\boldsymbol{R}(\boldsymbol{q},\Omega)\rangle_\Omega\ \Big)\delta\boldsymbol{q}\right\rangle_\Omega.$$

Based on the former augmented lagrangian, the shape optimization can be solved through the following nested approach:

1) Solve model equations $\boldsymbol{R}(\boldsymbol{q},\Omega) = 0$
2) Solve adjoint equations $\boldsymbol{R}_{adj}(\boldsymbol{q}_{adj}, \boldsymbol{q}, \Omega) = 0$
3) Obtain gradient from $\langle\nabla L_{aug}, V\rangle_\Omega = dL_{aug}(\Omega)[V]$
4) Solve bound - constrained quadratic subproblem

$$\min_V \ \frac{1}{2}V^T H_{approx}V + \nabla L^T{}_{aug}\,V$$

$$s.t. \ V_i \ \in \ [\boldsymbol{lb}(\boldsymbol{x}_i),\boldsymbol{ub}(\boldsymbol{x}_i)]so \ \Omega \in \Omega_{ad}$$

5) Update multipliers $\lambda_i$ and penalties $\sigma$.
6) Remesh after k optimization steps
7) Optionally loop back, after remesh of step 6, to step 1 again.

The shape derivative of the lagrangian $dL_{aug}(\Omega)\,[V]$ can be calculated based on the mesh node deformation field V. In order to transform the shape derivative into a shape gradient $\nabla L_{aug}$, use can be made of various inner products $\langle\nabla L_{aug}, V\rangle_\Omega$, in particular a so-called Sobolev smoothing may be applied.

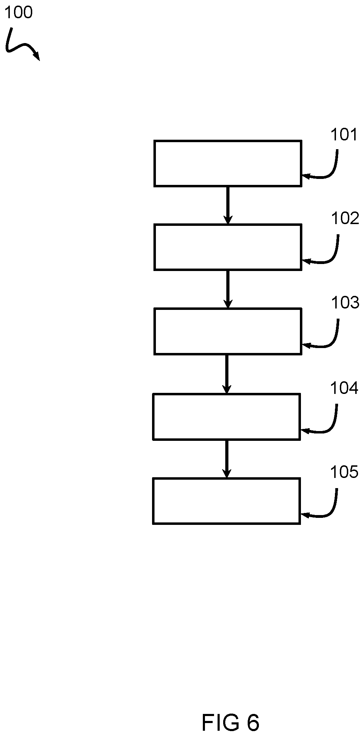

Fig. 6 shows a schematic diagram of a computer-implemented method 100 for optimizing geometric configurations of a thermal energy transfer channel as a physical object. In a first step 101, target design criteria of the physical object are obtained. In a second step 102, based on the target design criteria of the physical object, a unit cell is defined which is dimensioned such that the thermal energy transfer channel is formed by $N1 \times N2$ identical unit cells. In a third step 103, by means of a processing unit, a shape optimization of solid structures in the thermal energy transfer channel at the unit cell level is performed, wherein the geometric design of structures of a single unit cell is optimized based on a set of criteria including at least performance, wherein the shape optimization involves iterative modification of the boundary surfaces of at least one solid structure within the single unit cell, and wherein the shape optimization of the single unit cell is performed until a stop criterion is met, the stop criterion being defined as achieving a predetermined threshold of performance or reaching a maximum number of optimization iterations. In a fourth step 104, optimized design parameters representing geometric configuration of solid structures in each unit cell of the thermal energy transfer channel are output. In a fifth step 105, data is transferred based on the outputted optimized design parameters to production equipment to manufacture an optimized physical object representing the thermal energy transfer channel with $N1 \times N2$ identical unit cells.

It will be appreciated that a plurality of channels may form a thermal energy exchange/transfer device like a heat exchanger or a cooling device (e.g. cold plate, heat sink).

It will be appreciated that in some examples the thermal energy transfer device may predominantly involve one-way thermal energy transfer. However, in some other examples, the device may also be adapted for bi-directional heat transfer processes.

The terms "thermal energy transfer device" and "thermal energy exchange device" used in this disclosure may be used interchangeably. This interchangeability stems from the underlying principle that both terms describe mechanisms involved in the movement of thermal energy between different mediums or locations. Whether referred to as a transfer or an exchange, the fundamental operation involves the relocation of thermal energy, which is central to both concepts. Devices typically categorized under these terms, such as heat exchangers, heat pumps, heat sinks, radiators, etc., perform functions where thermal energy is not only transferred from one entity to another but may also involve a reciprocal exchange.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

**Claims**

1.  A computer-implemented method for optimizing geometric configurations of a thermal energy transfer device comprising at least one thermal energy exchange channel as a physical object, including the steps of:

    obtaining target design criteria of the physical object;
    defining, based on the target design criteria of the physical object, a unit cell which is dimensioned such that the thermal energy transfer channel is formed by N1 $\times$ N2 identical unit cells;
    performing, by means of a processing unit, a shape optimization of solid structures in the thermal energy transfer channel at the unit cell level, wherein the geometric design of structures of a single unit cell is optimized based on a set of criteria including at least performance, wherein the shape optimization involves iterative modification of the boundary surfaces of at least one solid structure within the single unit cell, and wherein the shape optimization of the single unit cell is performed until a stop criterion is met, the stop criterion being defined as achieving a predetermined threshold of performance or reaching a maximum number of optimization iterations;
    outputting optimized design parameters representing geometric configuration of solid structures in each unit cell of the thermal energy transfer channel; and
    transferring data based on the outputted optimized design parameters to production equipment to manufacture an optimized physical object representing the thermal energy transfer channel with N1 $\times$ N2 identical unit cells.

2.  The computer-implemented method of claim 1, wherein periodic flow equations are utilized to model fluid flow at each unit cell, the periodic flow equations ensuring similarity in fluid flow around each unit cell of the thermal energy transfer channel, and wherein periodic heat transfer equations are utilized to model heat transfer at each unit cell, the periodic heat transfer equations including both periodically varying and linearly varying components of the temperature field within the thermal energy transfer channel.

3.  The computer-implemented method of claim 2, wherein the periodic heat equations account for incremental temperature change in a thermal transfer fluid as it passes through successive unit cells in the thermal energy transfer channel.

4.  The computer-implemented method of claim 1, 2 or 3, wherein the initial geometric configuration of the at least one solid structure in the unit cell is formed by a pillar shape positioned between two parallel plates, serving as the top and bottom walls of the unit cell.

5.  The computer-implemented method of any one of the preceding claims, wherein the optimization is performed while adhering to predetermined constraints including at least a minimal material thickness of the at least one solid structure.

6.  The computer-implemented method of claim 5, wherein the minimal material thickness is determined by solving an Eikonal equation.

7.  The computer-implemented method of any one of the preceding claims, wherein the optimization of the shape of the at least one solid structure within the unit cell is constrained for avoiding intersecting itself and to prevent merging of structures from resulting in negative volume elements or induced topology changes that compromise at least one of a structural integrity, functional performance, or manufacturability of the thermal energy transfer device.

8.  The computer-implemented method of any one of the preceding claims, wherein remeshing is performed after one or more iterations of boundary surface modification of the at least one solid structure within the unit cell, wherein the remeshing is configured to handle the merging of discrete geometric entities into a single mesh structure.

9.  The computer-implemented method according to any one of the preceding claims, wherein the production equipment comprises at least one of an additive manufacturing system, or an etching system, which is capable of fabricating at least parts of the thermal energy transfer channel with N1 $\times$ N2 identical unit cells based on the optimized design parameters.

10. The computer-implemented method according to any one of the preceding claims, wherein a plurality of unit cells are arranged in a matrix configuration, each unit cell defining therein an individual thermal transfer element within the thermal energy transfer channel, the thermal transfer element being surrounded by thermal fluid.

11. The computer-implemented method according to any one of the preceding claims, wherein the geometric shape optimization of solid structures of the thermal energy transfer channel at a unit cell level employs a gradient-based optimization technique that uses adjoint-based optimization for calculating gradients during the iterative process, wherein the gradient-based optimization technique is used to iteratively adjust the shape of the at least one solid structure, and wherein shape sensitivities derived from the adjoint-based optimization are used to guide shape modifications.

12. The computer-implemented method according to any one of the preceding claims, wherein the set of criteria for optimization includes constraints based on operating conditions, namely at least one of a maximum pumping power, a maximum pressure drop requirement, or fixed mass flow rate.

13. A system for optimizing geometric configurations within a thermal energy transfer channel of a physical object, comprising:

an input module configured to obtain target design criteria of the physical object;
a design module configured to define, based on the target design criteria of the physical object, a unit cell dimensioned such that the thermal energy transfer channel is formed by N1 $\times$ N2 identical unit cells;
a processing unit configured to perform shape optimization of solid structures in the thermal energy transfer channel at the unit cell level, wherein the geometric design of structures of a single unit cell is optimized based on a set of criteria including at least performance, and wherein the shape optimization involves iterative modification of the boundary surfaces of at least one solid structure within the single unit cell, with the shape optimization of the single unit cell being performed until a stop criterion is met, the stop criterion defined as achieving a predetermined threshold of performance or reaching a maximum number of optimization iterations;
an output module configured to output optimized design parameters representing the geometric configuration of solid structures in each unit cell of the thermal energy transfer channel; and
a data transfer module configured to transfer data based on the outputted optimized design parameters to production equipment for manufacturing an optimized physical object representing the thermal energy transfer channel with N1 $\times$ N2 identical unit cells.

14. A method for constructing a thermal energy transfer device, comprising the steps of:

obtaining target design criteria of the thermal energy transfer device, wherein, based on the target design criteria of the physical object, a unit cell is defined which is dimensioned such that the thermal energy transfer channel is formed by N1 $\times$ N2 identical unit cells;
optimizing the shape of the at least one solid structure at a single unit cell level using the method of any of claims 1 to 12;
assembling the optimized unit cells into a thermal energy transfer device according to predefined design specifications of the thermal energy transfer device; and
wherein the unit cell structures are manufactured using additive manufacturing, etching, or hydroforming.

15. A thermal energy transfer device constructed employing the method according to any one of the preceding claims 1-12, wherein the thermal energy transfer device comprises a matrix of structures arrayed in at least one dimension, these structures are derived from a single unit cell model that has been subjected to one or more optimization process.

FIG 1

EP 4 654 068 A1

FIG 2

21

FIG 3

FIG 4

10a

10b 10c 10d 10e

FIG 5

100

101

102

103

104

105

FIG 6

Europäisches
Patentamt
European
Patent Office
Office européen
des brevets

# EUROPEAN SEARCH REPORT

**Application Number**

EP 24 17 7142

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHOU YUQING ET AL: "Topology Optimization of Manifold Microchannel Heat Sinks", 2020 19TH IEEE INTERSOCIETY CONFERENCE ON THERMAL AND THERMOMECHANICAL PHENOMENA IN ELECTRONIC SYSTEMS (ITHERM), IEEE, 21 July 2020 (2020-07-21), pages 740-746, XP033825279, DOI: 10.1109/ITHERM45881.2020.9190257 [retrieved on 2020-09-09] | 1-5,7-15 | INV. G06F30/23 G06F30/28 F28F7/02 ADD. G06F119/08 G06F119/18 |
| Y | * abstract * * figures 1,3-8 * * Sections I, II-A, II-B, II-C, II-E, III, III-B, IV * | 6 | |
| Y | COHEN BRIAN S ET AL: "A level set-based topology optimization approach for thermally radiating structures", STRUCTURAL AND MULTIDISCIPLINARY OPTIMIZATION, SPRINGER BERLIN HEIDELBERG, BERLIN/HEIDELBERG, vol. 65, no. 6, 26 May 2022 (2022-05-26), XP037854441, ISSN: 1615-147X, DOI: 10.1007/S00158-022-03261-6 [retrieved on 2022-05-26] * Section 4.4 * | 6 | |
| Y | Santhanakrishnan Mani Sekaran: "Topology Optimisation for Fluid Flow and Heat Transfer Applications", , 1 September 2018 (2018-09-01), XP093220635, Retrieved from the Internet: URL:https://gala.gre.ac.uk/id/eprint/25884 /1/Mani%20Sekaran%20Santhanakrishnan%20201 8%20-%20secured.pdf [retrieved on 2024-11-04] * page 44 * | 6 | |

**TECHNICAL FIELDS SEARCHED (IPC)**

G06F
F28F

The present search report has been drawn up for all claims

| Place of search | Date of completion of the search | Examiner |
|---|---|---|
| Munich | 5 November 2024 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)